Europäisches Patentamt

European Patent Office

Office européen des brevets

(11) Veröffentlichungsnummer: **0 428 778 A1**

# (12) EUROPÄISCHE PATENTANMELDUNG

(21) Anmeldenummer: **89121572.5**

(22) Anmeldetag: **21.11.89**

(51) Int. Cl.5: **B60T 13/66**

(43) Veröffentlichungstag der Anmeldung:
**29.05.91 Patentblatt 91/22**

(84) Benannte Vertragsstaaten:
**DE GB**

(71) Anmelder: **Siemens Aktiengesellschaft**
**Wittelsbacherplatz 2**
**W-8000 München 2(DE)**

(72) Erfinder: **Bourdon, Bernd, Dipl.-Ing.**
**Fuchsengarten 4**
**W-8520 Erlangen(DE)**

(54) **Automatisierungssystem für hydraulische oder pneumatische Bremsenventile im Bergbau.**

(57) Automatisierungssystem für hydraulische oder pneumatische Bremsenventile im Bergbau, insbesondere von Fördermaschinen, mit dem die Ventile elektrisch gesteuert, geregelt und überwacht werden, wobei es für das Steuern, Regeln und Überwachen eine digital arbeitende elektronische Automatisierungseinheit auf Prozessorbasis aufweist und wobei die Automatisierungseinheit aus zwei, vorzugsweise identischen, im Verbund arbeitenden, speicherprogrammierbaren Automatisierungsgeräten (1,2,33,34) besteht und wobei die einzelnen Bremsenventile (17,18,24,25,34) und die speicherprogrammierbaren Automatisierungsgeräte (1,2,33,34) eine Überkreuzschaltung aufweisen.

FIG 1

EP 0 428 778 A1

# AUTOMATISIERUNGSSYSTEM FÜR HYDRAULISCHE ODER PNEUMATISCHE BREMSENVENTILE IM BERG-BAU.

Die Erfindung betrifft ein Automatisierungssystem für hydraulische oder pneumatische Bremsenventile im Bergbau, insbesondere von Fördermaschinen, mit dem die Ventile elektrisch gesteuert, geregelt und überwacht werden.

Steuerungen für hydraulische oder pneumatische Bremsenventile im Bergbau sind in den verschiedensten Ausführungen bekannt. Es handelt sich hierbei um elektro-hydraulische Ausführungen, wie eine z.B. im technischen Informationsdienst der Firma SIMAG Transplan Nr. 320.014 vom April 1989 beschrieben ist. Derartige elektro-hydraulische Bremsensteuerungen arbeiten zuverlässig, sind jedoch relativ aufwendig, da sie aus Einzelgeräten wie Reglern, Schaltgeräten, Wandlern etc. zusammengesetzt sind. Es erfordert weiteren Aufwand, sie in das Leitsystem der Förderung einzubinden und zusammen mit anderen sicherheitstechnisch relevanten Einrichtungen zu überwachen, da sie analog arbeiten.

Es ist nun Aufgabe der Erfindung, ein kostengünstiges Automatisierungssystem für hydraulische oder pneumatische Bremsenventile im Bergbau anzugeben, mit dem eine Steuerung und Regelung der Bremsenventile sowie eine dauernde Überwachung möglich ist und die in ihrer Funktion jederzeit einfach den jeweiligen Anforderungen angepaßt werden kann. Dabei soll eine problemlose Einbringung, z.B. über eine Busstruktur, in das Überwachungssystem der gesamten Förderanlage möglich sein.

Die Aufgabe wird dadurch gelöst, daß das Automatisierungssystem für das Steuern, Regeln und Überwachen eine digital arbeitende elektronische Automatisierungseinheit auf Prozessorbasis aufweist. Durch die Verwendung einer digital arbeitenden elektronischen Automatisierungseinheit auf Prozessorbasis ergibt sich vorteilhaft und überraschenderweise unter Sicherheitsgewinn, eine wesentlich vereinfachte Ausbildung der Steuerung und Regelung. Gewünschte Zusatzfunktionen, wie eine geregelte Bremsung mit beliebiger Kennlinie, können ohne großen Mehraufwand leicht und einfach mit realisiert werden, die Montage und Inbetriebnahme wird wesentlich erleichtert. Über serielle Schnittstellen kann das Automatisierungssystem einfach mit anderen Automatisierungseinheiten verbunden werden.

In Ausgestaltung der Erfindung ist vorgesehen, daß das Automatisierungssystem aus zwei, vorzugsweise identischen, miteinander verbundenen, speicherprogrammierbaren Automatisierungsgeräten besteht. Hierdurch wird vorteilhaft die für derartige Steuerungen notwendige Redundanz erreicht, die zusammen mit einer ausgetesteten Software zu einer bisher unerreichten Betriebssicherheit führt. Durch ständiges digitales Vergleichen und Korrigieren der einzelnen Signalausgänge und Signalausbildungen kann weiterhin eine der analogen Funktion überlegene gleichmäßige Funktion der Steuerung und Regelung erreicht werden.

Die Betriebssicherheit wird insbesondere dadurch erhöht, daß die einzelnen Bremsenventile und die speicherprogrammierbaren Automatisierungsgeräte eine Überkreuzschaltung aufweisen. So kann eine sich vorteilhaft ständig selbst kontrollierende und von beiden Automatisierungsgeräten betriebene Steuerung realisiert werden, die in allen Teilen redundant ist. Redundanz besteht also nicht nur in Bezug auf die Bremsenventile, sondern auch in Bezug auf alle übrigen Teile der Steuerung und Regelung. Zusammen mit einer digitalen Drahtbruch- und Ausfallüberwachung, die vorteilhaft auch den geschädigten Leiterteil, die Ventilspule o.ä. meldet, ergibt sich eine vollständige Überwachung aller Anlagenteile.

Weitere Vorteile und Einzelheiten ergeben sich aus der nachfolgenden Beschreibung von Ausführungsbeispielen, anhand der Zeichnung und in Verbindung mit den Unteransprüchen. Es zeigt:

FIG 1 eine Steuerung für geregelte Proportionalventile,

FIG 2 eine Steuerung für ein geregeltes Druckbegrenzungsventil und

FIG 3 eine Steuerung für elektrisch betätigte Ventile und Schütze.

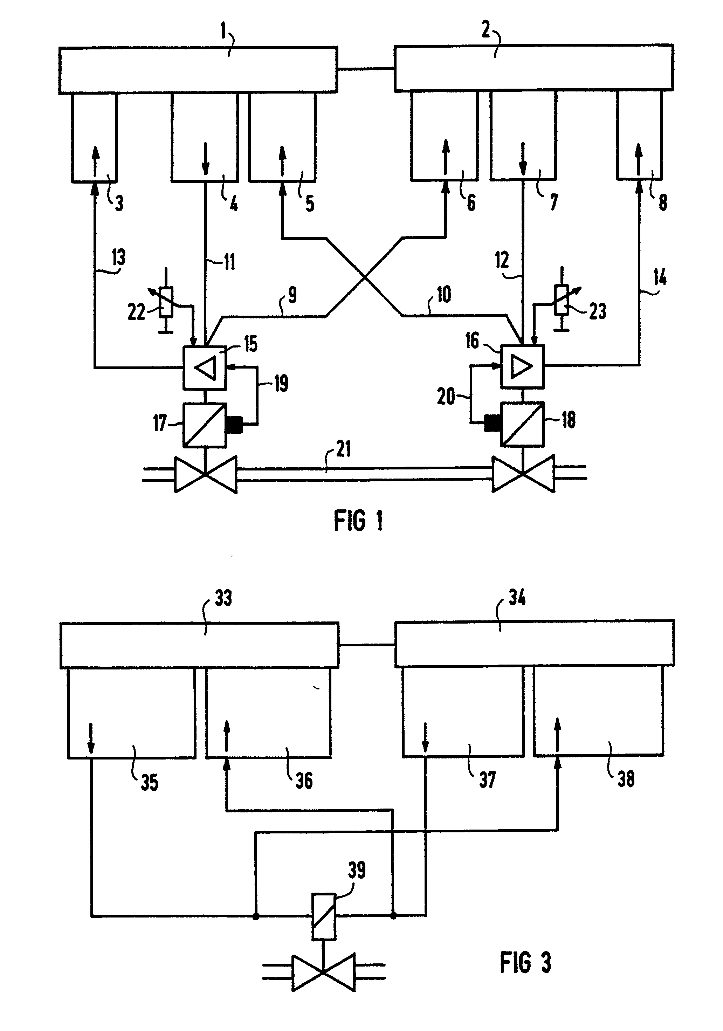

In FIG 1 sind mit 1 und 2 die beiden speicherprogrammierbaren Automatisierungsgeräte bezeichnet. Diese beiden speicherprogrammierbaren Automatisierungsgeräte, z.B. vom Siemens-Typ S5-, weisen Digitaleingänge 3 und 8, sowie Analogeingänge 5 und 6 und Analogausgänge 4 und 7 auf. Die Signale der Analogein-und ausgänge 4,5,6 und 7 werden in den beiden Automatisierungsgeräten 1 und 2 in digitale Signale umgewandelt bzw. aus ihnen gebildet. Die Digitalausgänge 13 und 14 dienen insbesondere der digitalen Drahtbruch- und Ausfallüberwachung, die in bekannter Weise, z.B. entsprechend der deutschen Patentanmeldung P 39 06 304.6, durchgeführt wird.

Über Leitungen 11,12 sind die beiden Automatisierungsgeräte 1 und 2 direkt und gekreuzt über Leitungen 9 und 10 mit den Signalgebern 15 und 16 für die Bremsenventile 17 und 18 verbunden. In Verbindung mit der erfindungsgemäß intermittierenden Ansteuerung der Signalgeber 15 und 16 ergibt sich eine jederzeit auf ihre Funktion überprüfbare und völlig redundante Ausführung, mit der jeder Hardware-Ausfall aufgefangen oder erkannt werden kann. So wird vorteilhaft einfach die für Fördermaschinen- oder Haspelbremsen etc. im Bergbau notwendige Funktionssicherheit erreicht.

Die Bremsenventile 17 und 18 sind vorteilhaft als Proportionalventile ausgeführt und werden über die Regelkreise 19 und 20 geregelt. Über Stellglieder 22 und 23 werden zu den Stellsignalen der Automatisierungsgeräte 1 und 2 einem Teilbremsdruck entsprechende Werte addiert; somit ist gewährleistet, daß bei Ausfall eines oder beider Automatisierungsgeräte 1,2 ein Mindestbremsdruck nicht unterschritten wird. Die Hydraulikleitung, die symbolisch dargestellt ist, ist mit 21 bezeichnet.

Die anforderungsgemäß vorhandene Spannungsprüfung, Verbindungen zu übergeordneten Leitsystemen, andere Funktionsgruppen etc. sind zur Vereinfachung der Darstellung nicht gezeichnet.

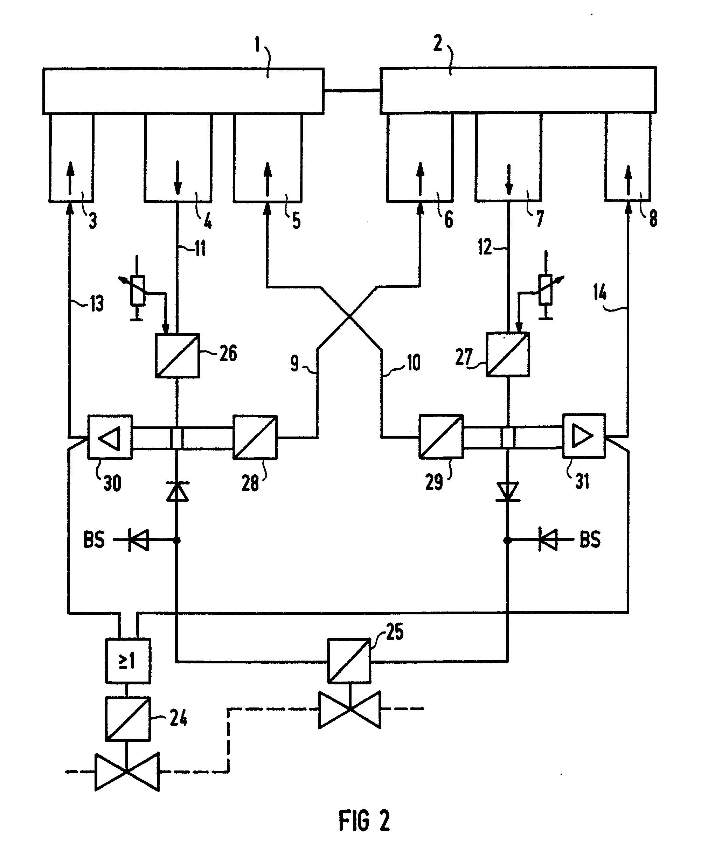

In FIG 2 bezeichnen 1 bis 14 die gleichen Geräte und Teile wie in FIG 1, da es sich um identische Ausführungen handelt. Abweichend von der Schaltung nach FIG 1 findet hier bei der Steuerung eines Druckbegrenzungsventils ohne Wegregelung eine Stromversorgung des Ventils aus zwei Stromquellen statt. Die Spannungs-Stromwandler 26 und 27 werden dabei so vorgesteuert, daß bei Eingangsspannung UE = 0 ein Ausgangsstrom fließt, der dem festeingestellten Teilbremsdruck bei Sicherheitsbremsung entspricht. In den Wandlern 28 und 29 werden die Ausgangsströme wieder umgewandelt und entsprechend der Schaltung nach FIG 1 in die zwei Automatisierunggeräte 1 und 2 in Form von Spannungs-oder Stromwerten eingegeben. Hier werden sie ebenso wie bei der Schaltung nach FIG 1 programmtechnisch sowohl auf Gleichheit untereinander als auch in Bezug auf die Sollwerte überwacht. Das Ventil 24 wird dabei von den Gebern 30 und 31 angesteuert und bei Drahtbruch oder Auslösung von Überwachungen spannungslos geschaltet, woraufhin das Ventil 25 in Funktion tritt und den eingestellten Druck konstant hält.

In FIG 3 ist die Ansteuerung von elektrisch betätigten Ventilen und Schützen allgemein über die beiden Automatisierungsgeräte 33 und 34 dargestellt. Wie ersichtlich, kommt auch hier wieder die erfindungsgemäße Überkreuzschaltung zur Anwendung, die mit der erfindungsgemäßen intermittierenden Ansteuerung, die digital besonders günstig auswertbar ist, für eine hohe Betriebssicherheit und eine sichere Überwachung sorgt. Die Ein- und Ausgaben der Automatisierungsgeräte 33 und 34 arbeiten mit Digital-Analog-Umsetzungen um das Ventil oder den Schütz 39 zu betätigen. In gleicher Weise können Stellglieder aller Art geschaltet werden, wobei Stellglieder mit Steuerströmen über ca. zwei Ampére zur Stromverstärkung zusätzlich über Schütze geschaltet werden müssen.

Die in den FIG 1-3 gezeigten Schaltungsbeispiele sind je nach Anforderung veränderbar und erweiterbar, allen Schaltungsausführungen ist dabei jedoch gemeinsam, daß durch die Verwendung eines Automatisierungssystems, das zwei Automatisierungsgeräte identischen oder unterschiedlichen und dann angepaßten Aufbaus und mit entsprechender Software sowie eine Überkreuzschaltung und intermittierende Arbeitsweise aufweist, eine allen Anforderungen genügende Sicherheit und Betriebsbereitschaft erreicht wird.

## Ansprüche

1. Automatisierungssystem für hydraulische oder pneumatische Bremsenventile im Bergbau, insbesondere von Fördermaschinen, mit dem die Ventile elektrisch gesteuert, geregelt und überwacht werden, **dadurch gekennzeichnet,** daß es für das Steuern, Regeln und Überwachen eine digital arbeitende elektronische Automatisierungseinheit auf Prozessorbasis aufweist.

2. Automatisierungssystem nach Anspruch 1, **dadurch gekennzeichnet**, daß die Automatisierungseinheit aus zwei, vorzugsweise identischen, im Verbund arbeitenden, speicherprogrammierbaren Automatisierungsgeräten (1,2,33,34) besteht.

3. Automatisierungssystem nach Anspruch 1 oder 2, **dadurch gekennzeichnet**, daß die einzelnen Bremsenventile (17,18,24,25,34) und die speicherprogrammierbaren Automatisierungsgeräte (1,2,33,34) eine Überkreuzschaltung aufweisen.

4. Automatisierungssystem nach Anspruch 1,2 oder 3, **dadurch gekennzeichnet**, daß die Bremsenventile (17,18,24,25) von dem jeweiligen Automatisierungsgerät (1,2,33,34) intermittierend angesteuert werden.

5. Automatisierungssystem nach Anspruch 4, **dadurch gekennzeichnet**, daß als Intermittierungsintervall ein unter der Zweitfehlereintrittsgrenze liegendes Intervall verwendet wird.

6. Automatisierungssystem nach Anspruch 1,2,3,4 oder 5, **dadurch gekennzeichnet**, daß die Bremsenventile (17,18) eine ständige Teildruckbeaufschlagung aufweisen.

7. Automatisierungssystem nach Anspruch 1,2,3,4,5 oder 6, **dadurch gekennzeichnet**, daß die, in die beiden Automatisierungsgeräte (1,2,33,34) eingelesenen Werte eine Gleichheitsüberwachung aufweisen.

8. Automatisierungssystem nach Anspruch 1,2,3,4,5,6 oder 7, **dadurch gekennzeichnet**, daß es bei Verwendung von Proportionalventilen eine separate, analoge Stellungseingabe aufweist.

9. Automatisierungssystem nach einem oder mehreren der vorhergehenden Ansprüche, **dadurch gekennzeichnet**, daß es eine digitale Drahtbruch- und Ausfallüberwachung aufweist.

10. Automatisierungssystem nach einem oder mehreren der vorhergehenden Ansprüche, **dadurch gekennzeichnet**, daß es getrennte Stromversorgungen für die einzelnen Automatisierungsgeräte und Bremsenventile mit einer Batteriepufferung aufweist.

11. Automatisierungssystem nach Anspruch 10, **dadurch gekennzeichnet**, daß die Batteriepufferung der Bremsenventile für jedes Ventil getrennt erfolgt.

.

FIG 1

FIG 3

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0207275 (KNORR-BREMSE)<br>* Spalte 3, Zeilen 20 - 43 *<br>* Spalte 5, Zeilen 5 - 36 *<br>* Figuren 1, 2 *<br>--- | 1-3, 10 | B60T13/66 |
| A | FR-A-2446749 (CHARBONNAGES DE FRANCE)<br>* Seite 1, Zeilen 1 - 4 *<br>* Seite 7, Zeile 9 - Seite 10, Zeile 19 *<br>* Figuren 1-3 *<br>--- | 1 | |
| A | GB-A-2188452 (ALFRED TEVES)<br>* Seite 1, Zeilen 5 - 15 *<br>* Seite 2, Zeilen 3 - 57 *<br>* Figur 1 *<br>--- | 1-3, 7 | |
| A | GB-A-2200505 (LORAL CORPORATION)<br>* Seite 2, Zeilen 12 - 24 *<br>* Seite 3, Zeile 30 - Seite 4, Zeile 17 *<br>* Seite 7, Zeile 25 - Seite 8, Zeile 15 *<br>* Figur 1 *<br>--- | 1, 2, 9, 10 | |
| A | GB-A-2127507 (ALFRED TEVES)<br>* Seite 1, Zeilen 14 - 27 *<br>* Seite 2, Zeile 126 - Seite 3, Zeile 60 *<br>* Figur 1 *<br>--- | 1-3, 7 | RECHERCHIERTE SACHGEBIETE (Int. Cl.5)<br><br>B60T |
| A | FR-A-2521508 (KNORR-BREMSE)<br>* Seite 1, Zeilen 4 - 17 *<br>* Seite 7, Zeile 24 - Seite 9, Zeile 14 *<br>* Seite 20, Zeile 32 - Seite 22, Zeile 28 *<br>* Figuren 1, 2 *<br>----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 10 JULI 1990 | CLASEN M.P. |